Europäisches Patentamt

European Patent Office

Office européen des brevets

(11) Publication number: **0 476 738 A1**

# EUROPEAN PATENT APPLICATION

(21) Application number: **91202184.7**

(22) Date of filing: **28.08.91**

(51) Int. Cl.5: **F25C 5/18**, G05D 9/12

(30) Priority: **12.09.90 IT 2144090**

(43) Date of publication of application:
**25.03.92 Bulletin 92/13**

(84) Designated Contracting States:
**AT BE CH DE DK ES FR GB GR IT LI LU NL SE**

(71) Applicant: **CASTEL MAC S.p.A.**
**Via del Lavoro, 9**
**I-31033 Castelfranco Veneto (Treviso)(IT)**

(72) Inventor: **Portelli, Paolo**
**Via D'Acquisto 7**
**I-31021 Mogliano Veneto (Treviso)(IT)**

(74) Representative: **Mittler, Enrico et al**
**c/o Marchi & Mittler s.r.l. Viale Lombardia, 20**
**I-20131 Milano(IT)**

(54) **Electronic device for controlling the level of the ice in a collecting container of a machine for making ice chips.**

(57) The device comprises an infra-red transmitter-receiver system (30, 31), located at the lower extremity of an ice-discharge conduit (28) in a collection container (29), and an electronic control circuit (6) connected to the receiver (31) so as to detect a maximum level of ice in the container (29) in the form of the non-reception of the ray sent by the transmitter and under these circumstances to cause the machine to stop until the ray is subsequently received.

Fig.2

The present invention relates to an electronic device for controlling the level of the ice in a collecting container of a machine for making ice chips.

According to the known art a machine for making ice chips comprises essentially a freezing chamber supplied with water from a hydraulic circuit, an evaporator of a refrigerating circuit associated with said chamber for cooling and consequently transforming into ice the water in said chamber and a motorized screw made to rotate inside said chamber for conveying the ice as it is formed toward a delivery mouth in the proximity of a container for collecting the ice. There is a discharge conduit for guiding the ice from the delivery mouth to the collection container, from which the ice is systematically withdrawn.

It is important that the ice in the collection container not exceed a pre-set level backing up inside the discharge conduit and possibly obstructing the delivery mouth with consequent danger of altering the operation of the machine itself.

According to the known art the problem of controlling the ice level in the collection container is entrusted to a thermostat-type system, which reads the quantity of ice present in the container on the basis of the temperature attained by the bulb of the thermostat itself when it comes into contact wiith the ice.

Such a system has some drawbacks due to calibration difficulties, so that often the machine is made to stop too early or too late, when the ice has already reached the delivery mouth.

The object of the present invention is to overcome the abovementioned drawbacks accomplishing a device for controlling the level of the ice in the collection container of a machine for making ice chips, which allows the stoppage and the start-up of the machine in relation to the level attained by the ice in the container, without the ice having the possibility of backing up into the discharge conduit up to the machine's delivery mouth.

According to the invention such object is attained through an electronic device for controlling the level of the ice in the collection container of a machine for making ice chips provided with an ice delivery mouth and with a discharge conduit located between said mouth and said container, characterized in that it comprises an infra-red transmitterreceiver system at the lower extremity of said ice-discharge conduit and an electronic control circuit connected to said receiver so as to detect a maximum level of ice in the container in the form of the non-reception of the ray sent by the transmitter and thus cause the machine to stop until the ray is subsequently received.

In such a way, when the ice reaches a maximum level corresponding to the lower extremity of the discharge conduit, the transmission of the ray from the transmitter to the receiver is interrupted by the ice itself and the non-reception is signal led by the receiver to the control circuit which stops the machine until the ice level falls below the set value. The ice cannot thus grow any further to reach the ice delivery mouth and so disturb the correct operation of the machine.

The features of the present invention shall be made more evident by an embodiment illustrated as a non-limiting example in the enclosed drawings, wherein:

Fig. 1 shows a diagrammatic view of an ice-making machine;

Fig. 2 shows the principle diagramme of the device for controlling the level of the ice according to the invention;

Fig. 3 is a block diagramme of the control circuit included in the device illustrated in Fig. 2.

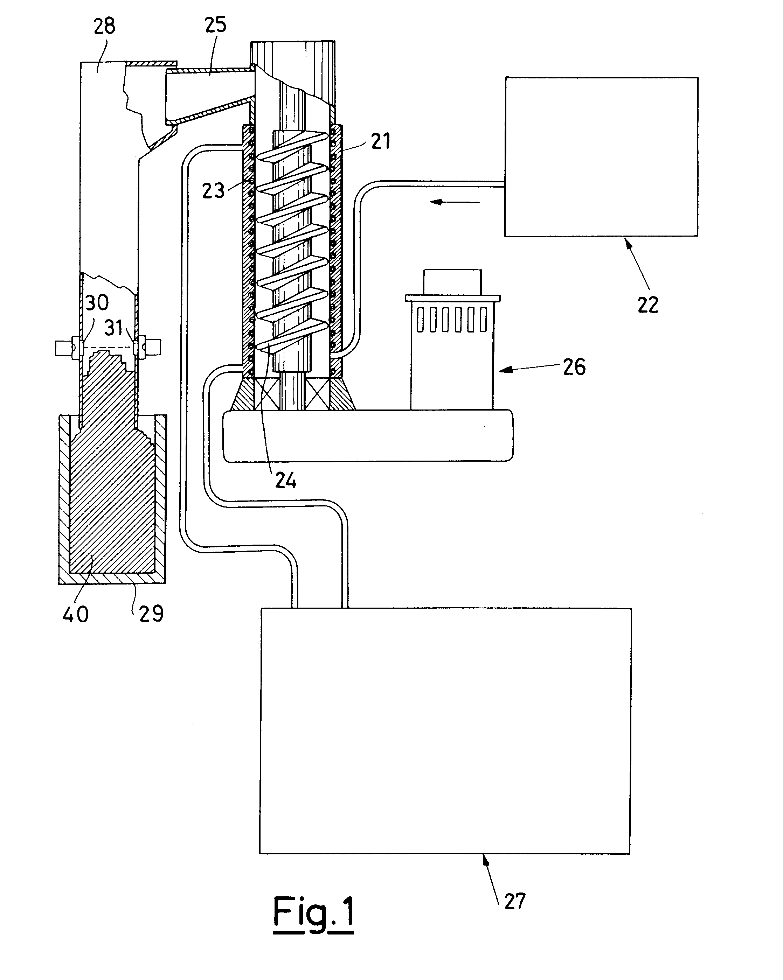

With reference to Fig. 1, there is shown a machine for making ice chips that comprises a freezing chamber 21 supplied with water from a hydraulic circuit 22, an evaporator 23 of a refrigerating circuit 27 associated with the chamber 21 for cooling and consequently transforming into ice the water in the chamber 21, a motorized screw 24 made to rotate inside the chamber 21 for conveying the ice as it is formed toward a delivery mouth 25, which through a discharge conduit 28 conveys the ice to a collection container 29, and a motorization unit 26 of the screw 25.

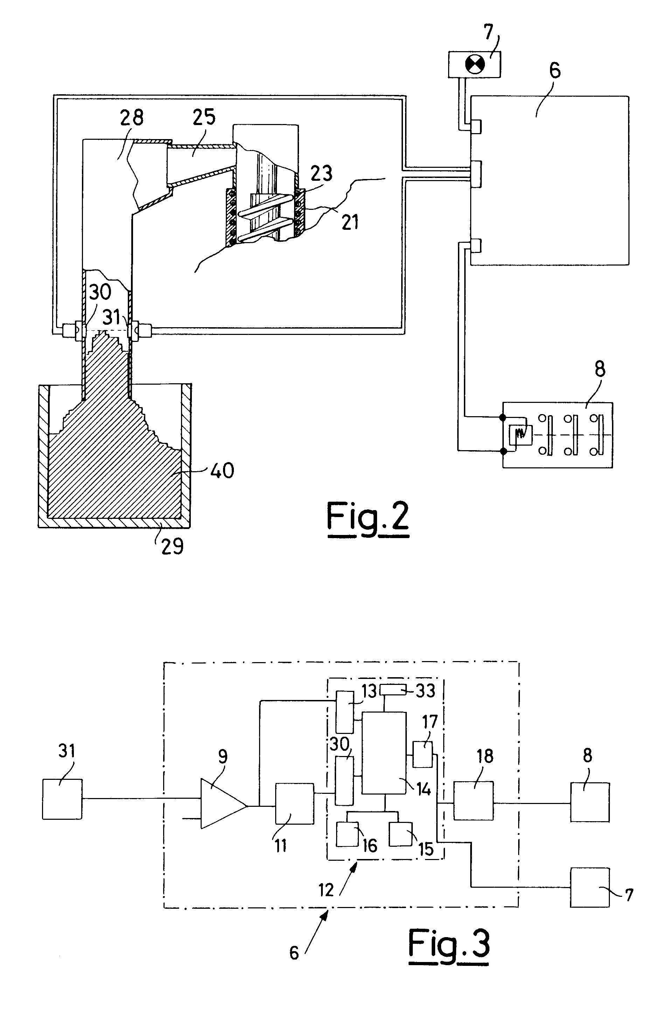

With reference to Fig. 2, with the lower end of the discharge conduit 28 there is associated an infra-red transmitter-receiver system 30, 31 connected to an electronic ice-level control circuit 6 to which there is connected electrically an optical signal unit (led) 7 suitable for signalling the attainment of the maximum level of ice in the collection container 29. The electronic circuit 6 controls a power circuit 8 for the operation of the ice-making machine.

With reference to Fig. 3 the electronic control circuit comprises a comparator 9 across an input of which there is applied a voltage from the receiver 31 to be compared with a reference voltage present across its other input. The output from the comparator 9 is a value that is indicative of whether the maximum level of ice in the collection container 29 and at the inlet to the discharge conduit 28 has been reached or otherwise. In series with the comparator 9 there is a timer 11 which, after a predetermined length of time of the signal related to too high a level of ice in the discharge conduit 28, sends a signal to the control circuit 6 such as to cause through the latter the temporary cut-off of the operation of the machine.

In cascade to the comparator 9 and to the timer 11 there is a microprocessor 12, which comprises an input register 13 for the temporary storage of the output signals from the comparator 9, an input gate 30 for the output signal from the timer 11, a RAM memory 15 in which the digital values from the register 13 are stored, an EPROM memory 16 in which the digital values indicative of the condition corresponding to the maximum level of ice having been reached in the discharge conduit 28 are stored, a central processing unit 14 suitable for making the comparison between the digital values in the RAM memory 15 and in the EPROM 16, an output register 17 for storing the result of the comparison made by the unit 14. Inside the microprocessor 12 there is also a timer 33 which has the object of delaying by a pre-determined length of time the reactivation of the machine when the level of the ice in the discharge conduit 28 falls back below the maximum level. To the output from the microprocessor 14 there are connected the optical signal unit 7 and a power circuit 18 suitable for operating the machine's power unit 8.

With reference to Fig.s 2 and 3 the operation of the device according to the present invention is as follows.

The hydraulic circuit 22 supplies water into the freezing chamber 21 for its transformation into ice thanks to the evaporator 23. The screw 24 made to rotate by the motorization unit 26 pushes the ice as it is formed towards the delivery mouth 25. From the delivery mouth 25 the ice is made to pass through the conduit 28 into the collection container 29.

As long as the level of the ice 40 in the container 29 remains below a given maximum the electronic ray transmitted by the transmitter 30 passes unaltered to the receiver 31, which sends to the comparator 9 and hence to the microprocessor 12 a signal that is introduced into the input register 13 and then made to pass into the RAM 15 to be compared through the processing unit 14 with the program data previously stored. The result of the comparison is stored in the output register 17 and constitutes a signal enabling the operation of the machine, transmitted to it through the power circuits 18, 8.

As soon as the level of the ice in the conduit 28 rises above a maximum level, it interrupts the ray transmitted by the transmitter 30 to the receiver 31. The absence of a signal is read by an input of the comparator 9 and generates a corresponding output signal by comparison with the voltage present across its other input. This output signal is introduced into the input register 13 of the microprocessor 12 and is then made to pass to the RAM 15 to be compared through the processing unit 14 with the program data previously stored in the EPROM. The comparator 9 also starts the timer 11. If throughout the time counted by the timer 11 the condition corresponding to the non-reception of the ray on the part of the receiver 31 continues within the RAM memory, the result of the comparison is made to pass through the output register 17 and reaches the power circuits 18 and 8 to thus cause the machine to stop.

Once the container 29 has been emptied, the receiver goes back to receiving the ray from the transmitter 30 since its path is no longer obstructed by the presence of ice.

The comparator 9 generates by comparison with the reference voltage present across its other input a signal that is indicative of an ice level below the set maximum. This value is introduced directly into the input register 13 of the microprocessor 12 and is then made to pass to the RAM 15 to be compared with the program data previously stored in the EPROM 16. The result of the comparison causes the flashing operation of the led 7 and activates the timer 33 which, in the absence of further signals, after a pre-determined length of time switches off the led 7 and, through the power circuit 18 and the entire power unit 8, re-starts the operation of the machine.

## Claims

1. Electronic device for controlling the level of the ice in a collecting container (29) of a machine for making ice chips provided with an ice delivery mouth (25) and with a discharge conduit (28) located between said mouth (25) and said container (29), characterized in that it comprises an infra-red transmitter-receiver system (30, 31) at the lower extremity of said ice-discharge conduit (28) and an electronic control circuit (6) connected to said receiver (31) so as to detect a maximum level of ice in the container (29) in the form of the non-reception of the ray sent by the transmitter (30) and under these circumstances to cause the machine to stop until the ray is subsequently received.

2. Device according to claim 1, characterised in that said control circuit (6) comprises a comparator across an input of which there is applied a voltage from the receiver (31) to be compared with a reference voltage present across its other input.

3. Device according to claim 2, characterised in that in cascade to the comparator (9) there is a microprocessor (12) suitable for checking the condition corresponding to the maximum level of ice in the discharge conduit (28) and to operate power circuits (18, 8) for stopping the machine.

4. Device according to claim 1, characterised in that in cascade to said comparator (9) there is a timer (11) which when the pre-set length of time for the non-reception of the ray sent by the transmitter (30) is exceeded sends to the microprocessor (12) a signal such as to cause the temporary stoppage of the operation of the machine.

5. Device according to claim 4, characterised in that said microprocessor (12) is programmed so as to respond to the restoration of a reception signal of the ray transmitted by the transmitter (30) with the re-activation of the operation of the machine, said microprocessor (12) being provided with an internal timer (33) to delay said re-activation by a predetermined length of time with respect to the restoration of said signal.

6. Device according to claim 5, characterised in that said microprocessor (12) comprises an input register (13) for the temporary storage of the output signal from the comparator (9), EPROM (16) and RAM (15) memories in which the program data related to the level of the ice in the container (29) and the digital values in the register (13) are stored, respectively, a processing unit (14) suitable for making the comparison between said digital signals and said program data and an output register (17) for storing the result of said comparison.

**Fig.1**

Fig.2

Fig.3

European
Patent Office

EUROPEAN SEARCH
REPORT

Application Number

EP 91 20 2184

## DOCUMENTS CONSIDERED TO BE RELEVANT

| Category | Citation of document with indication, where appropriate, of relevant passages | Relevant to claim | CLASSIFICATION OF THE APPLICATION (Int. CI.5) |
|---|---|---|---|
| Y | US-A-3 322 959   (LORENZ)<br>– – – | 1,2 | F 25 C 5/18<br>G 05 D 9/12 |
| A | US-A-3 322 959   (* column 2, line 16 - column 4, line 65; figures1-2 *)<br>– – – | 4 | |
| Y | GB-A-2 188 724   (KING-SEELY THERMOS)<br>– – – | 1,2 | |
| A | GB-A-2 188 724   (* page 1, line 65 - page 3, line 2; figures 1-3 )<br>– – – | 3,4 | |
| A | US-A-3 045 445   (MACLEOD)<br>* column 2, line 71 - column 4, line 60; figures 1-3 * *<br>– – – | 1,4 | |
| A | US-A-3 731 496   (FRAZIER)<br>* column 2, line 26 - column 5, line 40; figures 1-5 * *<br>– – – | 1 | |
| A | US-A-4 238 930   (HOGAN)<br>– – – | | |
| A | PATENT ABSTRACTS OF JAPAN vol. 9, no. 105 (P-354)(1828) 9 May 1985<br>& JP-A-59 229 626 ( MATSUSHITA DENKO )<br>* abstract * *<br>– – – | | |
| A | FR-A-2 442 473   (LOOMHURST)<br>– – – | | |
| A | EP-A-0 124 978   (ISHIDA KOKI SEISAKUSHO)<br>– – – – – | | |

TECHNICAL FIELDS
SEARCHED (Int. CI.5)

F 25 C
G 01 F
G 05 D

The present search report has been drawn up for all claims

| Place of search | Date of completion of search | Examiner |
|---|---|---|
| The Hague | 13 December 91 | BOETS A.F.J. |